# EUROPEAN PATENT APPLICATION

(11) **EP 3 421 479 A1**
(43) Date of publication of application: **02.01.2019**
(21) Application number: 17179182.5
(22) Date of filing: 30.06.2017
(51) Int. Cl.: C07F 9/6571

(54) **A PROCESS FOR PREPARATION OF DOPO DERIVATIVES**

(71) Applicant: Metadynea Austria GmbH, 3500 Krems (AT); Eidgenössische Materialprüfanstalt EMPA, 8600 Dübendorf (CH)
(72) Inventor: ZICH, Thomas, 4020 Linz (AT); BABINIEC, Lucas, 3622 Mühldorf (AT); SALMEIA, Khalifah Ahmad Mohammad, 9000 St.Gallen (CH); GAAN, Sabyasachi, 9200 Gossau (CH)
(74) Representative: Hoyng Rokh Monegier LLP

(57) **Abstract**

The present invention relates to a process for the preparation of a DOPO derivative DOPO-X comprising a 9,10-dihydro-9-oxa-10-phosphaphenanthrene-10-oxide DOPO moiety and a derivative group X according to formula 1, 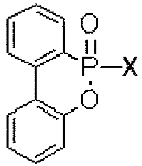 the process comprising the preparation of a DOPO derivative wherein X = Cl comprising the steps;
a) providing a solution of DOPO in a solvent,
b) introducing chlorine into the DOPO solution whilst maintaining a maximum reaction temperature below 20°C forming DOPO-Cl,
c) optionally removing volatiles and/or crystallising DOPO-Cl,
d) optionally further derivatization reaction steps.

The invention further relates to the use of DOPO-Cl in a process for preparation of further DOPO-derivatives, in particular DOPO-EDA, DOPO-ETA or DOPO-PEPA.

## Description

In the last years, 9,10-dihydro-9-oxa-10-phosphaphenanthrene-10-oxide (DOPO) has been used as starting material for synthesis of various organophosphorus compounds for different applications, wherein the use as flame retardant seems to be predominant. Since a lot of widely used linear, branched or cyclic halogen-based flame retardants are restricted or forbidden, new environmental friendly or -neutral organophosphorus flame retardants have been introduced.

The present invention relates to a process for the production of DOPO-Cl which provides a cheap and direct way of synthesis for DOPO-Cl. The invention further relates to a process for the preparation of DOPO-derivatives starting from DOPO-Cl, in particular the DOPO-CI obtained by the process of the invention, to the resulting high purity DOPO-Cl and derivatives, in particular DOPO-EDA, DOPO-ETA or DOPO-PEPA and the use thereof in polymer composition as flame retardant.

### Introduction

Organophosphorus compounds are ubiquitous and valuable building blocks and additives for application in miscellaneous fields in chemical industry as well as academia. In academic research they are used in organic synthesis in coordination chemistry, catalysis and biochemistry and they are also commonly used in several commercial applications such as pesticides, electrolytes or additives in polymers as lubricants or antioxidants.

Since more and more halogenated flame retardants have been suspected to cause health problems and to be ecologically harmful and bio-accumulative, the development of new organophosphorus compounds as their replacement is becoming popular and there is an immense interest of researchers as well as industry in their novel derivatives.

Organophosphorus compounds can be either applied as finishing additive or added to the polymer during its polymerization process or it's further processing. A variety of polymers, such as polyester or polyamide are processed by melt extrusion at elevated temperatures of >250 °C. Therefore flame retardant additives for such kind of polymers need to be thermally stable and unreactive at elevated processing temperatures for considerable duration of time.

Furthermore it is also desirable that the melting points of such additives should also be in a similar temperature range so as to ensure good dispersion and avoid rheological problems. Among the various classes of organophosphorus flame retardant compounds, 9,10-dihydro-9,10-oxa-10-phosphaphenanthrene-10-oxide (DOPO) and its derivatives have attracted a lot of attention recently due to its gas-phase flame inhibition mechanism. It is proposed that this gas-phase flame inhibition mechanism is similar to that of halogenated flame retardants.

In addition to its good gas-phase flame inhibition effect, preliminary toxicological- and ecological studies reveal that DOPO exhibits very low toxicity which was determined by toxicity tests towards the water flea Daphnia magna according to OECD guidelines 202.10 Thus DOPO and its derivatives are considered as efficient and eco-friendly alternative or replacement for toxic halogenated flame retardant additives

### Description of Related Prior Art

Two type of P-heteroatoms bond have been primarily investigated for DOPO-derivatives, namely P-O bond to prepare phosphonate type DOPO-derivatives or P-N bond to prepare phosphonamidate type DOPO derivatives. In both cases, P-H bond activation of DOPO is the intrinsic and crucial step to achieve P-N or P-O bond transformation. Therefore, the key element to synthesize the P-heteroatoms of DOPO derivatives is the transformation of P-H bond into P-Cl bond, affording the formation of DOPO-Cl.

Also different chlorination reagents such as PCl₅ (US4752648A) and hexachloroethane (US4536350A) have been investigated. Both methods have been reported as extremely exothermic reactions.

Z. Anorg. Allg. Chem. 2003, 629: 998-1000 describes the chlorination of DOP-Cl with Chlorine gas affording the general formula R₁R₂PCl₃ which subsequently was converted DOPO-Cl in presence of water. However, DOP-Cl is very a reactive substance and needs special treatment during its manipulation.

Another approach to synthesize DOPO-Cl was reported in US8703986B1 using SOCl₂ as chlorinating agent of DOPO-OH. However this approach required converting DOPO to DOPO-OH then refluxing the later product with SOCl₂ for 18 hours and removing the unreacted SOCl₂ by distillation.

In other embodiments, different DOPO-based phosphonamidate derivatives were synthesized using SO₂Cl₂ or trichlorocyanuric acid (TCCA) as chlorinating agents (Ind. Eng. Eng. Chem. Res. 2014, 53: 2889-2896). It was reported that the chlorination reaction using TCCA is extremely exothermic which hinders its industrial scale application.

In earlier studies it was reported that P-N bonded organophosphorus molecules such as phosphonamidate compounds show a remarkably higher flame retardant efficiency in flexible polyurethane foam matrices as compared to P-O bonded phosphate analogues. In continuation to this preliminary work, there were further designed novel P-N bonded structures based on DOPO The conversion of the P-H bond of DOPO to a P-N bond leads to the desired phosphonamidate derivatives. In literature one can find syntheses of such phosphonamidate molecules from DOPO via two common synthetic ways.

The first way involves a simple one step Atherton-Todd-Reaction (ATR) using CCl₄ as chlorinating agent. It is reported for a few examples in literature that this reaction results in the formation of DOPO-based phosphonamidates in good to excellent yields up to 87% without any additional difficult or time-consuming purification steps.

The major drawback of this method is the use of CCl₄, which is relatively expensive and more importantly, it is carcinogenic and harmful to the environment. Its use as solvent and reagent in industrial chemical production is especially not attractive in Europe. Thus a suitable replacement for CCl₄ as chlorination agent for the conversion of a P-H bond to an intermediate P-Cl bond is desirable.

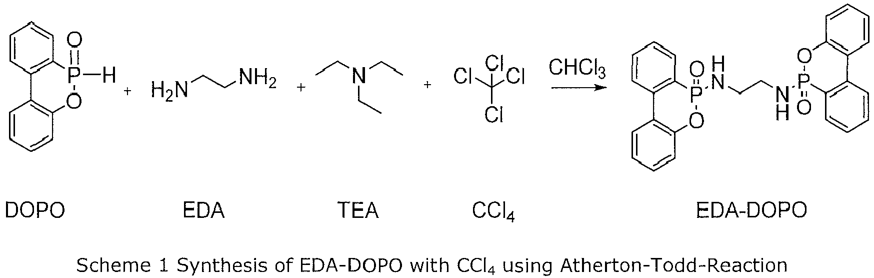

The second common way of synthesizing such phosphonamidates is via a two-step reaction sequence starting from trivalent DOP-Cl with subsequent H₂O₂ oxidation. Although this method avoids the use of CCl₄ it creates other synthetic challenges such as hydrolysis or transesterification reactions when using H₂O₂ as an oxidizing agent. Furthermore the chemical functional group tolerance is limited due to the use of a strong oxidizing agent and a multi-step synthetic procedure is usually complex and results are not always reproducible.

Recently, Atherton-Todd reaction was exploited using CCl₄ as chlorinating agent in presence of organic base to produce different novel bridged DOPO-derivatives with P-heteroatom bond (WO2013020696A2; EP2557085A1; JP2006083491A1).

Despite proposing DOPO-Cl as the active intermediate in Atherton-Todd reaction, isolation and characterization of DOPO-Cl from this reaction was not reported. Moreover, CCl₄ is carcinogenic and also both ozone-depleting and greenhouse gas which may limit its use in industry.

The preparation of DOPO-based phosphonamidates using CCl₄ has been described earlier for few compounds in lab scale experiments. But to the best of our knowledge no synthesis in a scale of > 1 mol, with regard to DOPO, has been reported so far. Due to a precipitation of the product from the reaction mixture the work up and isolation of the desired compounds is quite easy and efficient in a lab scale.

These results indicate that methods like CCl₄ or SO₂Cl₂ could be appropriate for up-scaling of such phosphonamidate compounds. The upscaling problem is a challenge in the large scale production of DOPO derivatives, as not every reaction can be upscaled without undue technical problems. As CCl₄ is toxic and a proven carcinogen and its use is restricted in many countries, SO₂Cl₂ seemed to be an efficient and attractive alternative reagent for the preparation of phosphonamidate compounds from phosphinites.

Extremely exothermic reactions are mostly a threat in industrial application. Hence, production methods using ambient temperature are preferred against reactions which may produce uncalculatable energy outburst.

### Description of the Invention

The invention relates to a process for the preparation of a DOPO derivative DOPO-X comprising a 9,10-dihydro-9-oxa-10-phosphaphenanthrene-10-oxide DOPO moiety and a derivative group X according to formula 1, 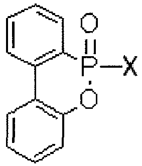 the process comprising the preparation of a DOPO derivative wherein X = Cl comprising the steps
a) providing a solution of DOPO in a solvent,
b) introducing chlorine into the DOPO solution whilst maintaining a maximum reaction temperature below 20°C forming DOPO-Cl,
c) optionally removing volatiles and/or crystallising DOPO-Cl,
d) optionally further derivatization reaction steps.

The chlorine (Cl₂) can be added as gas or in liquid form or in solution in a solvent. However, in a preferred embodiment according to the invention, the chlorine is introduced as chlorine gas into the DOPO solution.

The reaction is very exothermic and forms DOPO-CL and HCl gas. It must be avoided that the exothermic reaction heats the solution above the maximum temperature of 20°C. In the process according to the invention, it is preferable that the reaction temperature is between 0 and 20°C. The chlorine is preferably added gradually in time to a total amount such that the molar ratio of Chlorine (Cl₂) to DOPO is at least 1:1. It was shown that very pure DOPO-CI is formed with in high yield and with a very high purity. DOPO-CL with a purity over 99 wt% have been achieved in this process as determined with NMR in solution. The experimental condition for NMR measurements are as follows: 1H, 31P{1H} and 13C{1H} NMR spectra were collected at ambient temperature using Bruker AV-III 400 spectrometer (Bruker Biospin AG, Fällanden, Switzerland). 1H and 13C chemical shifts (δ) in ppm were calibrated to residual solvent peaks. The 31P chemical shifts were referenced to an external sample with neat H₃PO₄ at 0.0 ppm. For DOPO-CI measurement, the NMR sample was measured directly from the reaction mixture in the solvent CH₂Cl₂. The chlorine is preferably dosed into the DOPO solution to a molar ratio of Chlorine Cl₂ to DOPO of at least 1:1 and preferably not substantially higher than 1:1 in view of avoiding side reactions and contamination by unreacted chlorine.

Preferably, the solvent is an anhydrous organic solvent, preferably chosen from the group of dichloromethane, chloroform, acetonitrile, chlorobenzene, ethers or other chlorinated solvents, preferably anhydrous dichloromethane. In view of safety reasons, the solvent has a boiling point above 20°C to avoid boiling of the solvent during the process according to the invention.

The chlorination process is very exothermic. In order to avoid the formation of side products the reaction temperature is maintained below 20°C. In view of productivity the speed of dosing is preferably high and appropriate cooling means are preferred. The reaction can be also done by controlled slow dosing without substantial external cooling means, but in industrial practice external cooling will be needed.

In the process according to the invention, preferably the provided DOPO solution in step a) has a concentration of DOPO between 1 and 50 wt%, more preferably between 5 and 40 wt% relative to the weight of the solution. In view of achieving high purity and yield, a DOPO concentration between 5 and 20 wt% is most preferred. In view of productivity in industrial practice the concentration is preferably between 20 and 30 wt% at still acceptable purity.

In the process according to the invention, preferably the reaction is carried out in a reactor comprising a trap with a base solution, preferably a NaOH solution, an overpressure relief valve and wherein the reaction is carried out under inert atmosphere, preferably under a nitrogen atmosphere. With inert is meant in particular oxygen free. The HCl is emitted from the solution and trapped in the base solution in the trap, driving the reaction to completion.

The inventors have found that DOPO-Cl thus obtained in high purity and yield is very useful starting point for further derivatization. The invention thus also relates to a process for forming a DOPO derivative wherein the DOPO is bonded to the derivative group via a P-N or P-O bond, the process comprising adding to a solution of DOPO-Cl in a solvent, triethylamine and a reactant comprising one or more reactive groups selected from amine or hydroxyl groups, whilst maintaining a maximum reaction temperature below 20°C. The derivatization process according to the invention has the advantage over the known Atherton-Todd reaction in that it does not use CCl₄.

In a preferred embodiment, the process according to the invention comprises a further derivatization reaction step d) to form a DOPO derivative wherein the DOPO is bonded to the derivative group via a P-N or P-O bond, said further derivatization step d) comprises adding, to a solution of DOPO-Cl in a solvent, triethylamine and a reactant comprising one or more reactive groups selected from amine or hydroxyl groups, whilst maintaining a maximum reaction temperature below 20°C. The resulting DOPO derivative can be further isolated by crystallising, washing and/or drying the precipitate as described in the examples or other known manners.

Normally the DOPO-CI is not isolated and further derivatization steps are done directly in the solution in which the DOPO-CI is formed in the process according to the invention. The purity of the obtained DOPO-Cl is so high that the intermediate isolation or purification steps are not required before further derivatization, although they are also not excluded.

In a particular embodiment, the process according to the invention comprises a derivatization reaction step d) to form a poly-DOPO derivative, said further derivatization reaction step comprising adding to a solution of DOPO-Cl a polyfunctional reactant comprising 2 or more reactive groups selected from amine or hydroxyl groups and adding triethylamine whilst maintaining a maximum reaction temperature below 20°C.

Preferably, the process according to the invention comprises a further derivatization reaction step d) to form a poly-DOPO derivative forming a poly-DOPO derivative according to formula 2, 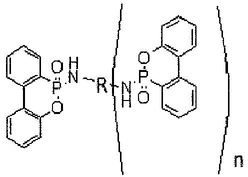 wherein n is at least 1 and wherein R is a bridging group, preferably alkyl, aryl or an amine functional polymer, the further derivatization reaction step d) comprising; adding to a solution of DOPO-CI a polyamine R(NH₂)ₘ, wherein m is at least 2, and triethylamine whilst maintaining a maximum reaction temperature below 20°C. The process according to the invention can optionally comprise crystallising, washing and/or drying of the precipitate.

In a preferred embodiment, R(NH2)m is a diamine forming a DOPO derivative according to formula 3, 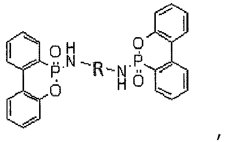 and more preferably R(NH₂)ₘ is a ethylenediamine forming an EDA-DOPO derivative according to formula 4,

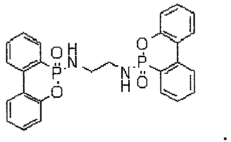

In another embodiment the process according to the invention comprises a further derivatization reaction step d) forming a ETA-DOPO derivative according to formula 5, 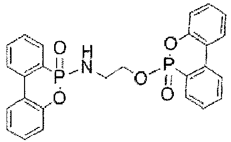 the further derivatization reaction step comprising adding to a solution of DOPO-CI in a solvent ethanolamine and triethylamine whilst maintaining a maximum reaction temperature below 20°C. The process according to the invention can further comprise removing volatiles and purification by liquid-liquid extraction.

In yet another embodiment, the process according to the invention comprises a further derivatization reaction step d) forming a PEPA-DOPO derivative according to formula 6, 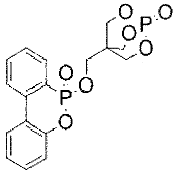 the further derivatization reaction step comprising adding to a solution of DOPO-CI in a solvent pentaerythritolphosphate alcohol and triethylamine whilst maintaining a maximum reaction temperature below 20°C.

The invention also relates to DOPO-Cl obtainable by the process according to the invention having a purity of at least 99 wt% as determined with NMR. The invention additionally relates to DOPO-derivatives obtainable by the process according to the invention.

Further, the invention relates to the use of DOPO-Cl obtained by the process according to the invention, preferably the DOPO-Cl having a purity of at least 99 wt% as determined with NMR, for the preparation of DOPO derivatives, preferably DOPO derivatives wherein the DOPO is bonded to the derivative group via a P-N or P-O bond. In a preferable embodiment of the invention, DOPO-CI is used for the preparation of DOPO phosphonamidates, preferably DOPO-EDA, DOPO-ETA or DOPO-PEPA.

The invention also relates to DOPO-derivatives obtainable by the process according to the invention.

Furthermore, the invention relates to DOPO-DEA having a melting temperature between 270 and 272 °C, DOPO-ETA having a melting temperature between 194 and 198 °C, and DOPO-PEPA having a melting temperature between 226 and 228 °C. Additionally, the invention relates to the use of these DOPO-derivatives as flame retardant, in particular in polymer compositions. Moreover, the invention relates to a polymer composition comprising these DOPO-derivatives as flame retardant.

Thus in various aspects the invention relates to
Item 18. Use of DOPO-CI obtained by the process according to anyone of claims 1 - 7, preferably the DOPO-CI of claim 16, for the preparation of DOPO derivatives, preferably DOPO derivatives wherein the DOPO is bonded to the derivative group via a P-N or P-O bond.
Item 19. The use according to item 18 for the preparation of DOPO phosphonamidates, preferably DOPO-EDA, DOPO-ETA or DOPO-PEPA.
Item 20. DOPO-DEA having a melting temperature between 270 and 272 °C.
Item 21. DOPO-ETA having a melting temperature between 194 and 198 °C.
Item 22. DOPO-PEPA having a melting temperature between 226 and 228 °C.
Item 23. Use of the DOPO-derivatives of items 20 - 23 as flame retardant, in particular in polymer compositions.
Item 23. Polymer composition comprising DOPO-derivatives of items 20 - 23 as flame retardant.

### Methods

¹H, ³¹P{1H} and ¹³C{¹H} NMR spectra were collected at ambient temperature using Bruker AV-III 400 spectrometer (Bruker Biospin AG, Fällanden, Switzerland). ¹H and ¹³C chemical shifts (δ) in ppm were calibrated to residual solvent peaks. The ³¹P chemical shifts were referenced to an external sample with neat H₃PO₄ at 0.0 ppm. For DOPO-CI measurement, the NMR sample was measured directly from the reaction mixture in the solvent CH₂Cl₂,

### Detailed Description of the Invention

It has now been revealed that the synthesis way to DOPO derivatives like DOPO-EDA, DOPO-ETA or DOPO-PEPA including the intermediate DOPO-Cl is an excellent way to reach the products mentions above in excellent yields.

Surprisingly it was shown, that the direct way of chlorination via Cl₂ - Gas was more successful and higher-yielded than alternative ways mentioned above, like the Atherton - Todd Reaction with CCl₄ or the Sulfurylchloride SO₂Cl₂-Method. Additionally the Cl₂-Gas method is easier to perform and can be upscaled to industrial scale.

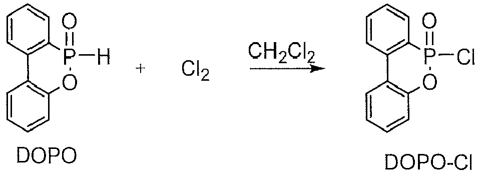

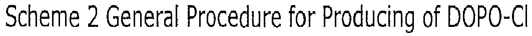

### 1. Synthesis of DOPO-Cl (50g scale)

Two-neck round bottomed flask connected to a saturated NaOH solution and overpressure relief valve was charged with DOPO (1 eq.) in anhydrous CH₂Cl₂ (5 eq.) under N₂ atmosphere. Cl₂ gas was then introduced to the reaction vessel in a rate that the reaction temperature does not exceed 20 °C (20 L/h flowrate).

After 30 min (consuming around 1 equivalent of Cl₂ to DOPO), Cl₂ flow was stopped and the volatiles were completely removed under N₂ flow. The white solid was analyzed by GC-MS which showed complete conversion of DOPO to DOPO-CI without any side products. ³¹P NMR (162.0 MHz, CDCl₃) δ (ppm): 20.10.

Emanating from DOPO-Cl, it was now possible to synthetize EDA-DOPO both on laboratory and industrial scale

### 2a. Synthesis of EDA-DOPO (100g Scale)

DOPO-CI (1 eq.) was dissolved in anhydrous CH₂Cl₂ (5 eq.) under N₂ atmosphere. EDA (0.5 eq.) and triethylamine (1.1 eq.) in CH₂Cl₂ (2 eq.) were then added dropwise in a rate that the temperature does not exceed 20 °C. After complete addition, the reaction mixture was stirred for 1h and filtered. The solid was then washed with CH₂Cl₂ and Ethanol and then water. The white product was then collected and dried in vacuum at 60°C. Yield: 90%.

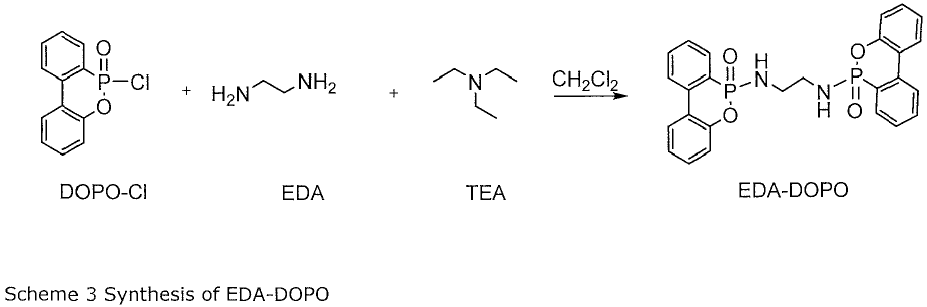

### 2b Synthesis of EDA-DOPO (Industrial scale)

A reactor (495 L) connected to a trap with NaOH solution (10%) and overpressure relief device was charged with DOPO (73 Kg) and anhydrous CH₂Cl₂ (694 Kg) under N₂ atmosphere. Cl₂ gas (24 Kg) was then introduced to the reactor in a rate (1m³/h) that the reaction temperature does not exceed 20 °C for 7.6 h.

After complete feeding, the reaction was stirred for 5 h and the volatiles were then completely removed under N₂ flow. The white DOPO-Cl was then re-dissolved in anhydrous CH₂Cl₂ (179 Kg). EDA (10.1 Kg) and triethylamine (51.3 Kg) in anhydrous CH₂Cl₂ (179 Kg) were then dropwise added. After complete addition, the reaction mixture was stirred at ambient temperature for 3h.

The white precipitate was collected by filtration and washed with CH₂Cl₂ (2 x 400 Kg), Ethanol (250 Kg) and water (2 x 300 Kg). The white product was then collected and dried in vacuum at 60 °C. Yield: 90%.

### 3. Synthesis of ETA-DOPO (50g scale)

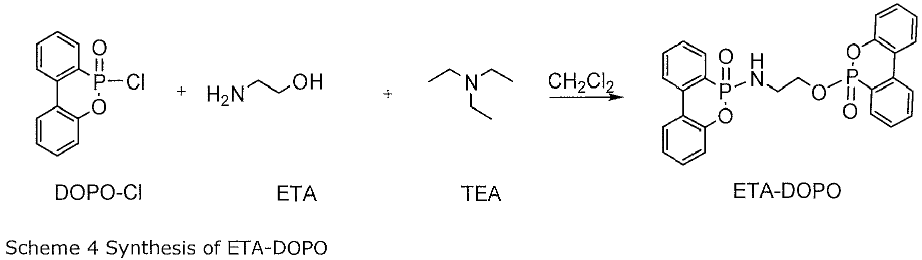

Continuing to 1. DOPO-CI (1 eq.) was dissolved in anhydrous CH₂Cl₂ (5 eq.) under N₂ atmosphere. ETA (0.5 eq.) and triethylamine (1.1 eq.) in CH₂Cl₂ (4 eq.) were then added dropwise in a rate that the temperature does not exceed 20 °C. After complete addition, the reaction mixture was stirred overnight at ambient temperature

The volatiles were then removed completely and the residue was dissolved in chloroform (4 eq.) and washed three times with water (4eq.). The organic was then isolated and dried over anhydrous Na₂SO₄. After filtration the volatiles were then removed and the white solid was then dried in vacuum at 60 °C. Yield: 70%

### 4. Synthesis of DOPO-PEPA (10 scale)

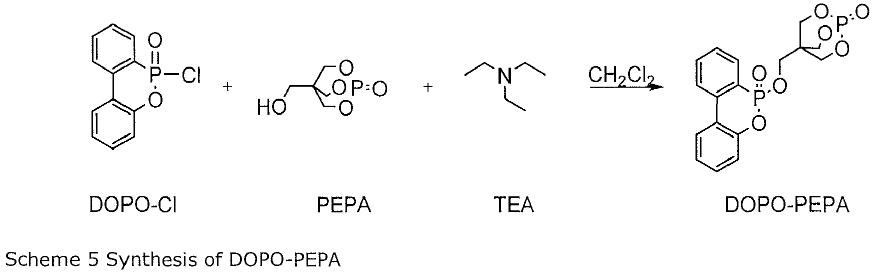

Continuing to step 1, PEPA (1 eq.) was charged in three-neck round bottomed flask and flushed with N₂ and was then dissolved in anhydrous CH₂Cl₂ (2 eq.) followed by addition of triethylamine (1.1 eq.). DOPO-CI (1 eq.) was dissolved in anhydrous CH₂Cl₂ (5 eq.) and added dropwise at 0 °C. After complete addition the reaction mixture was stirred overnight at ambient temperature.

The volatiles were then completely removed and the residue was washed with water. The product was then collected by filtration and dried in vacuum at 60 °C. Yield: 60%

### Description of illustrative embodiments

The following examples depict the synthesis on different scales for the Products DOPO-Cl, and its derivatives DOPO-EDA, DOPO-ETA and DOPO-PEPA.

### Inventive Example 1 - General Procedure for producing DOPO-CI

Two-neck round bottomed flask connected to a saturated NaOH solution and overpressure relief valve was charged with DOPO (1 eq.) in anhydrous CH₂Cl₂ (5 eq.) under N₂ atmosphere. Cl₂ gas was then introduced to the reaction vessel in a rate that the reaction temperature does not exceed 20°C (20 L/h flowrate). After 30 min (consuming around 1 equivalent of Cl₂ to DOPO), Cl₂ flow was stopped and the volatiles were completely removed under N₂ flow. The white solid was analyzed by GC-MS which showed complete conversion of DOPO to DOPO-CI without any side products.

The products showed following properties:

**Table 1: Properties Inventive example 1**

| | |
|---|---|
| ¹H NMR (400.2 MHz, CDCl₃)□□ (ppm) | 8,09-7,95 (m, 4H); 7,82-7,75 (t, 2H); 7,62- 7,55 (t, 2H); 7,50-7,42 (t, 2H); 7,40-7,25 (m,4H) |
| ³¹P NMR (162.0 MHz,CDCl₃) □□ (ppm) | 20.1 |

### Inventive Example 2 - Synthesis of EDA-DOPO (100 g scale) using DOPO-Cl

DOPO-CI (1 eq.) was dissolved in anhydrous CH₂Cl₂ (5 eq.) under N₂ atmosphere. EDA (0.5 eq.) and triethylamine (1.1 eq.) in CH₂Cl₂ (2 eq.) were then added dropwise in a rate that the temperature does not exceed 20°C. After complete addition, the reaction mixture was stirred for 1h and filtered. The solid was then washed with CH₂Cl₂ and Ethanol and then water. The white product was then collected and dried in vacuum at 60°C. Yield: 90%.

The products showed following properties:

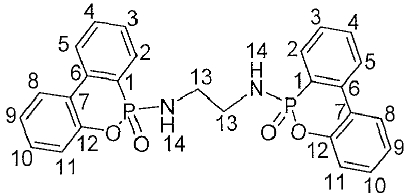

**Table 2: Properties Inventive example 2**

| m.p. (°C) | 270-272 |
|---|---|
| ¹H NMR (400.2 MHz, DMSO-d₆) δ (ppm) | 8.14 (m, J(H,P) = 3.1, 2H, H-5); 8.10 (m, 2H, H-8); 7.77 (m, J(H,P) = 22.1, 2H, H-2); 7.70 (m, 2H, H-4); 7.50 (m, J(H,P) = 3, 2H, H-3); 7.39 (m, 2H, H-10); 7.27 (m, 2H, H-9); 7.15 (m, 2H, H-11); 5.75 (m, J(H,P) = 11.8, 2H, NH); 2.85 (m, 4H, H-13) |
| ¹³C NMR (100.6 MHz, DMSO-d₆) δ (ppm) | 149.4 (d, J(C,P) = 7.2, C-12); 135.9 (d, J(C,P) = 6.7, C-6); 132.7 (C-4); 130.4 (C-10); 129.4 (d, J(C,P) = 9.6, C-2); 128.3 (d, J(C,P) = 14.3, C-3); 125.4 (d, J(C,P) = 0.6, C-8); 125.2 (d, J(C,P) = 161.9, C-1); 124.2 (C-9); 124.1 (d, J(C,P) = 10.7, C-5); 121.9 (d, J(C,P) = 11.5, C-7); 120.0 (d, J(C,P) = 5.9, C-11); 41.7 (d, J(C,P) = 5.6, C-13). |
| ³¹P NMR (162.0 MHz, DMSO-d₆) δ (ppm) | 14.70, 14.66 |

### Comparative Example 1 - Synthesis of EDA-DOPO via Atherton-Todd using CCl₄

A three neck round bottom flask (1L) connected to additional funnel, condenser and bubbler, was charged DOPO (150g, 0.69 moL), EDA (16.68 g, 0.28 moL), TEA (77.23 g, 0.76 moL) and CHCl₃ (400 mL). The reaction vessel was immersed in an ice bath, and CCl₄ (117.40 g, 0.76 moL) was dropwise added under N₂ at a rate that the reaction temperature did not exceed 10 °C.

After the complete addition, the white suspension reaction was allowed to warm up to ambient temperature with stirring overnight. After the complete reaction, the white product was filtered off, washed with CHCl₃, Ethanol and then water successively. The white product was then collected and extra dried under vacuum at 60 °C. Yield: 90%

The products showed following properties:

**Table 3: Properties Comparative example 1**

| m.p. (°C) | 267-270 |
|---|---|
| ¹H NMR (400.2 MHz, DMSO-d6) δ (ppm) | 8.14 (m, J(H,P) = 3.1, 2H, H-5); 8.10 (m, 2H, H-8); 7.77 (m, J(H,P) = 22.1, 2H, H-2); 7.70 (m, 2H, H-4); 7.50 (m, J(H,P) = 3, 2H, H-3); 7.39 (m, 2H, H-10); 7.27 (m, 2H, H-9); 7.15 (m, 2H, H-11); 5.75 (m, J(H,P) = 11.8, 2H, NH); 2.85 (m, 4H, H-13) |
| ¹³C NMR (100.6 MHz, DMSO-d6) δ (ppm) | 149.4 (d, J(C,P) = 7.2, C-12); 135.9 (d, J(C,P) = 6.7, C-6); 132.7 (C-4); 130.4 (C-10); 129.4 (d, J(C,P) = 9.6, C-2); 128.3 (d, J(C,P) = 14.3, C-3); 125.4 (d, J(C,P) = 0.6, C-8); 125.2 (d, J(C,P) = 161.9, C-1); 124.2 (C-9); 124.1 (d, J(C,P) = 10.7, C-5); 121.9 (d, J(C,P) = |
| | 11.5, C-7); 120.0 (d, J(C,P) = 5.9, C-11); 41.7 (d, J(C,P) = 5.6, C-13). |
| ³¹P NMR (162.0 MHz, DMSO-d6) (ppm) | 15.30, 15.20 |

### Inventive Example 3 - Synthesis of EDA-DOPO (Industrial scale) using DOPO-Cl

A reactor (1m³, equipped with an overpressure valve) connected to an exhaust air purification plant and a trap with NaOH solution (10%) and overpressure relief device was charged with DOPO (73 kg) and anhydrous CH₂Cl₂ (694 kg) under N₂ atmosphere. Cl₂ gas (24 kg) was then introduced to the reactor in a rate (1 m³/h) (up to 2 m³/h) that the reaction temperature did not exceed 20°C for 7.6 h.

After complete feeding, the reaction was stirred for 5 h and the volatiles were then completely removed under N₂ flow. The white DOPO-Cl was then dissolved in anhydrous CH₂Cl₂ (179 kg). EDA (10.1 kg) and triethylamine (51.3 kg) in anhydrous CH₂Cl₂ (179 kg) were then dropwise added. After complete addition, (feeding the reaction mixture EDA/TEA/CH₂Cl₂ was done in 2 hours, after complete addition, stirring for 1 hour at ambient temperature) the reaction mixture was stirred at ambient temperature for 3 h.

The white precipitate was collected by filtration and washed with CH₂Cl₂ (2 X 400 kg), Ethanol (250 kg) and water (2 x 300 kg). The white product was then collected and dried in vacuum at 60 °C. Yield: 90%.

The products showed following properties:

**Table 4: Properties Inventive example 3**

| m.p. (°C) | 270-272 |
|---|---|
| ¹H NMR (400.2 MHz, DMSO-d6) δ (ppm) | 8.14 (m, J(H,P) = 3.1, 2H, H-5); 8.10 (m, 2H, H-8); 7.77 (m, J(H,P) = 22.1, 2H, H-2); 7.70 (m, 2H, H-4); 7.50 (m, J(H,P) = 3, 2H, H-3); 7.39 (m, 2H, H-10); 7.27 (m, 2H, H-9); 7.15 (m, 2H, H-11); 5.75 (m, J(H,P) = 11.8, 2H, NH); 2.85 (m, 4H, H-13) |
| ¹³C NMR (100.6 MHz, DMSO-d6) δ (ppm) | 149.4 (d, J(C,P) = 7.2, C-12); 135.9 (d, J(C,P) = 6.7, C-6); 132.7 (C-4); 130.4 (C-10); 129.4 (d, J(C,P) = 9.6, C-2); 128.3 (d, J(C,P) = 14.3, C-3); 125.4 (d, J(C,P) = 0.6, C-8); 125.2 (d, J(C,P) = 161.9, C-1); 124.2 (C-9); 124.1 (d, J(C,P) = 10.7, C-5); 121.9 (d, J(C,P) = 11.5, C-7); 120.0 (d, J(C,P) = 5.9, C-11); 41.7 (d, J(C,P) = 5.6, C-13). |
| ³¹P NMR (162.0 MHz, DMSO-d6) δ (ppm) | 14.70; 14.66 |

### Inventive Example 4 - Synthesis of ETA-DOPO (50 g scale) using DOPO-Cl

Continuing to step 1, DOPO-CI (1 eq.) was dissolved in anhydrous CH₂Cl₂ (5 eq.) under N₂ atmosphere. ETA (0.5 eq.) and triethylamine (1.1 eq.) in CH₂Cl₂ (4 eq.) were then added dropwise in a rate that the temperature did not exceed 20°C.

After complete addition, the reaction mixture was stirred overnight at ambient temperature. The volatiles were then removed completely and the residue was dissolved in Chloroform (4 eq.) and washed three times with water (4 eq). The organic phase was then isolated and dried over anhydrous Na₂SO₄.

After filtration the volatiles were then removed and the white solid was then dried in vacuum at 60 °C. Yield: 70%.

The products showed following properties

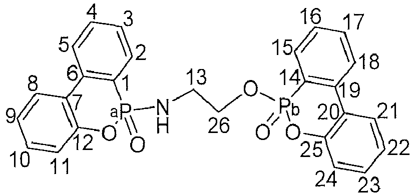

**Table 5: Properties Inventive example 4**

| m.p. (°C) | 194.0-198.0 |
|---|---|
| ¹H NMR (400.2 MHz, DMSO-d₆) δ (ppm) | 8.24 (m, J(H,P) = 6.2, 1H, H-18); 8.18 (m, 1H, H-21); 8.14 (m, 1H, H-5); 8.12 (m, 1H, H-8); 7.89 (m, J(H,P) = 14.6, 1H, H-15); 7.83 (m, 1H, H-17); 7.71 (m, 1H, H-4); 7.65 (m, J(H,P) = 14, 1H, H-2); 7.61 (m, J(H,P) = 3.6, 1H, H-16); 7.45 (m, 1H, H-23); 7.44 (m, 1H, H-3); 7.40 (m, 1H, H-10); 7.32 (m, 1H, H-22); 7.28 (m, 1H, H-9); 7.27 (m, 1H, H-24); 7.12 (m, 1H, H-11); 5.83 (m, J(H,P) = 11.8, 1H, NH); 4.02 (m, 2H, H-26); 3.00 (m, 2H, H-13). |
| ¹³C NMR (100.6 MHz, DMSO-d₆) δ (ppm) | 149.3 (d, J(C,P) = 7.1, C-12); 149.2 (d, J(C,P) = 7,9, C-25); 136.2 (d, J(C,P) = 7.1, C-19); 135.9 (d, J(C,P) = 7, C-6); 134.0 (d, J(C,P) = 2.4, C-17); 132.7 (C-4); 130.9 (C-23); 130.4 (C-10); 129.9 (d, J(C,P) = 9.3, C-15); 129.4 (d, J(C,P) = 9.7, C-2); 128.7 (d, J(C,P) = 15.1, C-16); 128.3 (d, J(C,P) = 14.3, C-3); 125.9 (C-21); 125.4 (d, J(C,P) = 0.6, C-8); 125.3 (d, J(C,P) = 162.9, C-1); 125.1 (C-22); 124.6 (d, J(C,P) = 11.7, C-18); 124.3 (C-9); 124.1 (d, J(C,P) = 10.7, C-5); 122.0 (d, J(C,P) = 11.8, C-20); 121.9 (d, J(C,P) = 11.6, C-7); 121.5 (d, J(C,P) = 178.9, C-14); 120.1 (d, J(C,P) = 5.9, C-11); 119.9 (d, J(C,P) = 6.5, C-24); 66.1 (C-26); 40.4 (d, J(C,P) = 7.3, C-13). |
| ³¹P NMR (162.0 MHz, DMSO-d₆) δ (ppm) | 14.6 (Pₐ); 9.8 (P_{b}). |

### Comparative Example 2 - Synthesis of ETA-DOPO using CCl₄

A three neck round bottom flask (1L) connected to additional funnel, condenser and bubbler, was charged DOPO (150 g, 0.69 moL), ETA (21.20 g, 0.32 moL), TEA (77.23 g, 0.76 moL) and CHCl3 (400 mL). The reaction vessel was immersed in an ice bath, and CCl₄ (117.40 g, 0.76 moL) was dropwise added under N₂ at a rate that the reaction temperature did not exceed 10 °C.

After the complete addition, the white suspension reaction was allowed to warm up to ambient temperature with stirring overnight. After the complete reaction, the organic volatiles were then removed in vacuum, and the white product was filtered off, washed with Ethanol and water successively. The white product was then collected and extra dried under vacuum at 60 °C. Yield: 80%

The products showed following properties

**Table 6: Properties Comparative example 2**

| m.p. (°C) | 182.0-185.0 |
|---|---|
| 1H NMR (400.2 MHz, DMSO-d₆) δ (ppm) | 8.24 (m, J(H,P) = 6.2, 1H, H-18); 8.18 (m, 1H, H-21); 8.14 (m, 1H, H-5); 8.12 (m, 1H, H-8); 7.89 (m, J(H,P) = 14.6, 1H, H-15); 7.83 (m, 1H, H-17); 7.71 (m, 1H, H-4); 7.65 (m, J(H,P) = 14, 1H, H-2); 7.61 (m, J(H,P) = 3.6, 1H, H-16); 7.45 (m, 1H, H-23); 7.44 (m, 1H, H-3); 7.40 (m, 1H, H-10); 7.32 (m, 1H, H-22); 7.28 (m, 1H, H-9); 7.27 (m, 1H, H-24); 7.12 (m, 1H, H-11); 5.83 (m, J(H,P) = 11.8, 1H, NH); 4.02 (m, 2H, H-26); 3.00 (m, 2H, H-13). |
| 13C NMR (100.6 MHz, DMSO-d₆) δ (ppm) | 149.3 (d, J(C,P) = 7.1, C-12); 149.2 (d, J(C,P) = 7.9, C-25); 136.2 (d, J(C,P) = 7.1, C-19); 135.9 (d, J(C,P) = 7, C-6); 134.0 (d, J(C,P) = 2.4, C-17); 132.7 (C-4); 130.9 (C-23); 130.4 (C-10); 129.9 (d, J(C,P) = 9.3, C-15); 129.4 (d, J(C,P) = 9.7, C-2); 128.7 (d, J(C,P) = 15.1, C-16); 128.3 (d, J(C,P) = 14.3, C-3); 125.9 (C-21); 125.4 (d, J(C,P) = 0.6, C-8); 125.3 (d, J(C,P) = 162.9, C-1); 125.1 (C-22); 124.6 (d, J(C,P) = 11.7, C-18); 124.3 (C-9); 124.1 (d, J(C,P) = 10.7, C-5); 122.0 (d, J(C,P) = 11.8, C-20); 121.9 (d, J(C,P) = 11.6, C-7); 121.5 (d, J(C,P) = 178.9, C-14); 120.1 (d, J(C,P) = 5.9, C-11); 119.9 (d, J(C,P) = 6.5, C-24); 66.1 (C-26); 40.4 (d, J(C,P) = 7.3, C-13). |
| 31P NMR (162.0 MHz, DMSO-d₆) (ppm) | 14.6 (Pa); 9.8 (Pb). |

### Inventive Example 5 - Synthesis of DOPO-PEPA (10 g scale) using DOPO-Cl

Continuing to step 1, PEPA (1 eq.) was charged in three-neck round bottomed flask and flushed with N₂ and was then dissolved in anhydrous CH₂Cl₂ (2 eq.) followed by addition of trimethylamine (1.1 eq.). DOPO-Cl (1 eq.) was dissolved in anhydrous CH₂Cl₂ (5 eq.) and added dropwise at 0 °C.

After complete addition the reaction mixture was stirred overnight at ambient temperature. The volatiles were then completely removed and the residue was washed with water. The product was then collected by filtration and dried in vacuum at 60 °C. Yield: 60%

The products showed following properties

**Table 7: Properties Inventive example 5**

| m.p. (°C) | 226.0-228.0 |
|---|---|
| ¹H NMR (400.2 MHz, DMSO-d₆) δ (ppm) | 8.29-8.21 (m, 2H); 7.96-7.87 (m, 2H); 7.68 (dt, J = 3.8 Hz, J = 7.4 Hz, 1H); 7.53 (t, 7.7 Hz, 1H); 7.41 - 7.35 (m, 2H); 4.49 (d, J = 6.5 Hz, 6H); 4.10-4.00 (m, 2H). |
| ¹³C NMR (100.6 MHz, DMSO-d₆) δ (ppm) | 148.9; 136.4; 134.4; 131.1; 130.0; 128.9; 126.0; 125.4; 124.9; 121.9; 120.7; 120.0; 75.0; 61.9; 37.5. |
| ³¹P NMR (162.0 MHz, DMSO-d₆) δ (ppm) | 10.4; -7.7. |

### Comparative Example 3 - Synthesis of DOPO-PEPA using CCl₄

A three neck round bottom flask (2L) connected to additional funnel, condenser, mechanical stirrer and bubbler, was charged DOPO (300 g, 1.39 moL), PEPA (274.92 g, 1.5 moL) and dissolved in CH₂Cl₂ (900 mL). NMI (136.74 g, 1.67 moL) was then dropwise added through dropping funnel.

The reaction vessel was immersed in an ice bath, and CCl₄ (234.79 g, 1.53 moL) was then dropwise added under N₂ at a rate that the reaction temperature did not exceed 15 °C. After the complete addition, the reaction temperature was allowed to warm up to ambient temperature for 1 h, and the reaction was refluxed for 6h (at 45 °C).

The mixture was then cooled to 5 °C and filtered. The first crop solid was collected and washed separately with water and dried in vacuum at 60 °C. The filtrate was then subjected to rotary evaporator and the volatiles were removed until obtaining viscous residue. Water was added and the mixture was stirred with mechanical stirrer overnight.

The white precipitate was collected by filtration, washed three times with water and dried in vacuum at 60 °C. The two batches were then collected, affording 70% total yield.

The products showed following properties

**Table 8: Properties Comparative example 3**

| m.p. (°C) | 218.0-222.0 |
|---|---|
| 1H NMR (400.2 MHz, DMSO-d6) δ (ppm) | 8.27 - 8.20 (m, 2H); 7.95 - 7.85 (m, 2H); 7.65 (dt, J = 3.8 Hz, J = 7.4 Hz, 1H); 7.51 (t, 7.7 Hz, 1H); 7.40 - 7.34 (m, 2H); 4.48 (d, J= 6.5 Hz, 6H); 4.09-3.98 (m, 2H). |
| 13C NMR (100.6 MHz, DMSO-d6) δ (ppm) | 148.9; 136.4; 134.4; 131.1; 130.0; 128.9; 126.0; 125.4; 124.9; 121.9; 120.7; 120.0; 75.0; 61.9; 37.5. |
| 31P NMR (162.0 MHz, DMSO-d6) δ (ppm) | 10.9; -7.2 |

From the examples it can be see that Atherton-Todd reaction has the external cooling as a mayor drawback in scaling up efforts, which can be avoided by using the DOPO-CI method.

DOPO derivatives synthetized by Atherton-Todd method have generally a lower melting point range as the same derivatives synthetized by DOPO-CI method. This points out, that the derivatives made via DOPO-CI route have generally a higher purity than the same derivatives synthetized via Atherton-Todd method.

## Claims

1. A process for the preparation of a DOPO derivative DOPO-X comprising a 9,10-dihydro-9-oxa-10-phosphaphenanthrene-10-oxide DOPO moiety and a derivative group X according to formula 1, 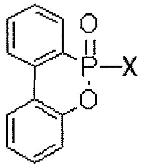 the process comprising the preparation of a DOPO derivative wherein X = Cl comprising the steps;
a) Providing a solution of DOPO in a solvent,
b) introducing chlorine into the DOPO solution whilst maintaining a maximum reaction temperature below 20°C forming DOPO-Cl,
c) optionally removing volatiles and/or crystallising DOPO-Cl,
d) optionally further derivatization reaction steps.

2. The process according to claim 1, wherein the chlorine is introduced as chlorine gas into the DOPO solution.

3. The process according to claim 1 or 2, wherein the chlorine is dosed into the DOPO solution to a molar ratio of Chlorine Cl₂ to DOPO of at least 1:1 and preferably not substantially higher than 1:1.

4. The process according to claims 1 - 3, wherein the solvent is an anhydrous organic solvent, preferably chosen from the group of dichloromethane, chloroform, acetonitrile, chlorobenzene, ethers or other chlorinated solvents, preferably anhydrous dichloromethane.

5. The process according to claims 1 - 4, wherein the reaction temperature is between 0 and 20°C.

6. The process according to claims 1- 5, wherein the provided DOPO solution in step a) has a concentration of DOPO between 1 and 50 wt%, preferably between 5 and 40 wt% relative to the weight of the solution.

7. The process according to claims 1 - 6, wherein the reaction is carried out in a reactor comprising a trap with a base solution, preferably a NaOH solution, an overpressure relief valve and wherein the reaction is carried out under inert atmosphere, preferably nitrogen.

8. The process according to anyone of claims 1 - 7, comprising a further derivatization reaction step d) to form a DOPO derivative wherein the DOPO is bonded to the derivative group via a P-N or P-O bond, said further derivatization step d) comprising adding, to a solution of DOPO-CI in a solvent, triethylamine and a reactant comprising one or more reactive groups selected from amine or hydroxyl groups, whilst maintaining a maximum reaction temperature below 20°C.

9. A process for forming a DOPO derivative wherein the DOPO is bonded to the derivative group via a P-N or P-O bond, the process comprising adding, to a solution of DOPO-Cl in a solvent, triethylamine and a reactant comprising one or more reactive groups selected from amine or hydroxyl groups, whilst maintaining a maximum reaction temperature below 20°C.

10. The process according to anyone of claims 1 - 8, comprising a derivatization reaction step d) to form a poly-DOPO derivative, said further derivatization reaction step comprising adding to a solution of DOPO-Cl a polyfunctional reactant comprising 2 or more reactive groups selected from amine or hydroxyl groups and adding triethylamine whilst maintaining a maximum reaction temperature below 20°C.

11. The process according to anyone of claim 1 to 8, comprising a further derivatization reaction step d) to form a poly-DOPO derivative forming a poly-DOPO derivative according to formula 2, 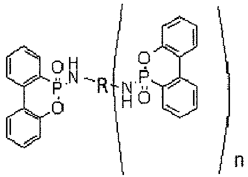 wherein n is at least 1 and wherein R is a bridging group, preferably alkyl, aryl or an amine functional polymer, the further derivatization reaction step d) comprising; adding to a solution of DOPO-Cl a polyamine R(NH₂)ₘ, wherein m is at least 2, and triethylamine whilst maintaining a maximum reaction temperature below 20°C.

12. The process according to claim 11, wherein R(NH₂)ₘ is a diamine forming a DOPO derivative according to formula 3, preferably ethylenediamine

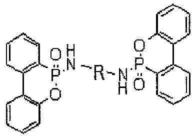

13. The process according to anyone of claims 1 - 8, comprising a further derivatization reaction step d) forming a ETA-DOPO derivative according to formula 5, 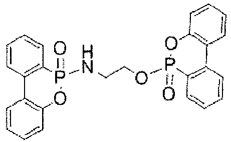 the further derivatization reaction step comprising adding to a solution of DOPO-Cl in a solvent ethanolamine and triethylamine whilst maintaining a maximum reaction temperature below 20°C.

14. The process according to anyone of claims 1 - 8, comprising a further derivatization reaction step d) forming a PEPA-DOPO derivative according to formula 6, 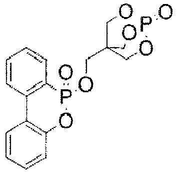 the further derivatization reaction step comprising adding to a solution of DOPO-Cl in a solvent pentaerythritolphosphate alcohol and triethylamine whilst maintaining a maximum reaction temperature below 20°C.

15. DOPO-Cl obtainable by the process of claims 1- 7 having a purity of at least 99 wt% as determined with NMR or DOPO-derivatives obtainable by the process of claims 8 - 15.
